# EUROPEAN PATENT APPLICATION

(11) **EP 2 848 437 A1**
(43) Date of publication of application: **18.03.2015**
(21) Application number: 14184268.2
(22) Date of filing: 10.09.2014
(51) Int. Cl.: B60G 17/0185

(54) **Damage Detection and Reporting in a Vehicle**

(30) Priority: 11.09.2013 GB 201316163
(71) Applicant: Nissan Motor Manufacturing (UK) Ltd., Cranfield Bedfordshire MK43 0DB (GB)
(72) Inventor: Zong, Xiaozhou, Cranfield, Bedfordshire MK430DB (GB)

(57) **Abstract**

An onboard system for suspension or steering damage detection in a wheeled vehicle includes a control unit (10), sensors (11a-11o) and a memory (15). If a sensor input, or a combination of sensor inputs, exceeds a safety threshold, the control unit records the incident in the memory. The system registers minor accidents, such as a kerb strike, which may not cause immediately obvious damage, but may cause deterioration later. Preferably the system includes a communication unit (17) and/or user alert unit (16) which prompts a vehicle inspection to be arranged. GPS may be used to record the incident location, and to transmit that location to third parties, e.g. highway authorities. Location data may be fed into a satnav system to generate a position alert and/or revised route guidance. The system may be used in fleet vehicles to share hazard information with other fleet vehicles.

## Description

The present invention relates to an onboard system and method for damage detection and reporting in a wheeled vehicle; and to a vehicle incorporating such a system. Particularly, the invention provides a capability to monitor and report relatively minor damage to suspension or steering that may not initially impair operation of the vehicle, but could eventually affect safety if such damage is not repaired. The information may also be used to minimize further damage to the vehicle.

### BACKGROUND TO THE INVENTION

In some cases it has been found that component deformation, resulting in a safety risk to a vehicle occupant, can be traced back to relatively minor damage sustained by the component in an earlier incident. For example, driving over a pothole or into a kerb at sufficient speed may cause a minor dent/deformation to a suspension linkage component which, while not initially impairing use of the vehicle, could eventually propagate to more serious damage at a later date. Specifically, it is possible that after the vehicle has been driven for a further 10,000 - 20,000 kilometres, a significant fracture may form across the surface of the component.

A vehicle user may or may not notice minor damage at the time it occurs, as any resulting symptoms - such as a slight change to steering characteristics - may not easily be detected. Furthermore, even if damage is noted, the user may or may not seek inspection soon after the incident from an authorized repairer in order to determine whether any lasting damage has occurred. In some cases, a vehicle user may consciously decide to ignore damage on the basis that the vehicle still operates and may even meet acceptable safety standards for day-to-day operation of the vehicle (e.g. pass an MoT inspection).

Systems that detect and report damage in vehicles are known. For example, US2006/0226960 discloses a vehicle telemetry system that collects and sends crash data to emergency services in the event that the vehicle is involved in a moderate or severe crash. Since the system is intended to issue an almost immediate request for assistance, unless over-ridden, its threshold for activation must be relatively high; i.e. triggered in the event of a collision that is likely to cause harm to a vehicle occupant.

US2011/0060500 describes a system and method for monitoring tyre pressure indirectly by measuring wheel rotation speed and vibration, wherein tyre pressure may or may not be an indicator of other damage, e.g. to the suspension system of the vehicle. According to this system, the driver is alerted by a warning message. The system is not capable of distinguishing whether the reduced tyre pressure is a result of damage to the vehicle or a simple flat tyre. Furthermore, this prior art system clearly cannot detect damage to a vehicle that causes no change to tyre pressure; and does not necessarily detect damage in real time, as soon as it occurs. This may make it difficult to determine the cause of such damage.

Neither of these prior art systems alerts the vehicle driver in real time; and neither offers any means or method to prevent or discourage repetition of damage to the vehicle.

### SUMMARY OF THE INVENTION

The present invention seeks to provide a system and method for damage detection in a wheeled vehicle that will enable a record to be kept of any incidents exceeding a predetermined safety threshold, such that subsequent safety risks can be assessed and mitigated. Preferably, the system can also assist in identifying the root cause of a failure in the event of neglect by a user after the damage has occurred. In any event, the system and method of the invention enables distinction between failures that result from damage sustained during operation by the vehicle user; as opposed to defects in the manufacture of a component. Furthermore, the system may be used to discourage repetition of actions which may result in damage to the vehicle.

As the system detects shock loads in real time, as they occur - rather than detecting changes in vehicle characteristics after an impact - it can pinpoint where and when the damage or potential damage occurred, which may in turn indicate why the damage or potential damage occurred. It can also encourage the driver to slow down, and/or to drive more carefully.

In one broad aspect of the invention, there is provided an onboard system for suspension or steering damage detection in a wheeled vehicle including: a control unit, at least one sensor and a memory means for logging an incident, wherein the control unit monitors an input condition to the at least one sensor for comparison to a safety threshold, and if a safety threshold is exceeded then a log of the incident is recorded to the memory means; characterized in that: the system further includes an alert means for informing a vehicle user of the incident; wherein the alert means is activated by the control unit immediately upon detection of the incident and/or periodically such as on vehicle ignition. The wheeled vehicle may be a vehicle driven through or by its wheels.

Preferably, a safety threshold which will cause registration/logging of an incident is intended to be lower than that corresponding to a level of damage which would cause immediate serious impairment to operation of the motor vehicle. This is necessary in order to detect damage which is not an immediate safety risk; and may not be apparent to, or be noticed by, the driver; but may eventually lead to more serious damage over time. The type of sensors that may best be utilised by the invention include those that measure load and/or acceleration as an indication of a direct impact input condition; and may include accelerometers, potentiometers, LVDT's (linear variable displacement transformers), Hall effect sensors, proximity sensors, encoders, and yaw rate sensors Readings from such sensors, or combinations of sensors, when exceeding the predetermined threshold(s), will trigger the recording of an incident log. Acceleration may be measured in any suitable axis or combination of axes; safety thresholds may be based on readings from more than one sensor.

The system includes an alert means whereby the incident is reported to a vehicle user. When alerted, the user will be prompted to take the vehicle for inspection by an authorized repairer or dealer. The form of the alert may be visual (e.g. a malfunction light/icon, a graphic illustration such as a vehicle map, text on a navigation display) or audible (e.g. a spoken warning message or alarm tone), preferably activated immediately upon occurrence of the incident and/or periodically thereafter, such as on vehicle ignition. However, in any event if the user ignores the alert and *does not* seek advice on the extent of the damage, a record has been kept of the incident details. This step of automatic alerting removes the subjective judgement of the user with regard to whether the vehicle should be inspected or not.

In a preferred embodiment of the invention a communication unit is provided such that, once an incident has been detected by the control unit, the event is automatically or periodically reported to a party external to the vehicle (e.g. dealer or manufacturer). Such communication may be via a telematics service and/or utilising cellular networks where an SMS message could be issued. Automated reporting of this type prompts the third party, e.g. dealer, to contact the customer to arrange for vehicle inspection. The urgency of the contact may depend on the severity of the incident/impact and the expected consequences.

External reporting of incidents causing immediate or potential vehicle damage opens a number of possibilities beyond alerts to dealers. For example, where a parent lends a vehicle to their son or daughter, the parent may be anxious as to how and where the vehicle is driven. Incident reporting may indicate to the parent that their child is driving carelessly, and/or to unauthorized destinations; particularly where GPS data is transmitted as part of an incident report. Such reports may affect whether the child is allowed to borrow the vehicle again. The system for damage detection may therefore be configured to send incident reports to a computer or mobile device belonging to the vehicle owner or operator. In this context, there is no need to record GPS data, nor any other data, if no damage or potential damage is recorded.

Similarly, operators of fleet vehicles, such as vans, are usually highly motivated to avoid unnecessary repair costs; and also to avoid risks of theft or malicious damage resulting from travel into certain geographical areas, especially after dark. Incident reports comprising sensor load indication, GPS location data, and day and time data may therefore be provided to a vehicle fleet management centre in order to assist fleet managers in managing their drivers. As in the previous example, there is no need to record GPS data, nor any other data, if no damage or potential damage is recorded.

On the other hand, pothole strikes may occur to careful drivers going about their lawful and legitimate business. To cater for this possibility, the damage detection system may be arranged to send a message, such as an SMS text message or an email, to the local government body responsible for highway maintenance, to ask them to effect a repair. Such messages may be logged for later analysis in a vehicle fleet management centre.

In an example, the damage detection system according to the invention may be arranged to communicate with damage detection systems fitted to other vehicles having the same owner or operator; by telemetry, or by any other suitable communications system. All vehicles in a particular operator's fleet may be linked to each other and/or to a fleet management centre. This enables fleet vehicles to automatically record and report road hazards such as potholes to each other, and/or to their operating base.

In a further example, the damage detection system according to the invention may be linked to a satnav (satellite navigation system) already present in the vehicle so as to mark the location where an incident occurred on a map. This may in turn encourage the driver to take extra care when driving though the same location again, and/or to select an alternative route. A low-level alarm such as a chime may be arranged to warn the driver that he or she is approaching a previously recorded hazard area. Alternatively or additionally, the satnav may automatically calculate and present an alternative route to avoid the hazard. An option may be presented to the driver to delete the hazard indication; alternatively, it may be deleted automatically after a set time interval - for example, one week, or one month.

Preferably, the incident details to be logged by the memory means are selected from one or more of the following: date and time, mileage, GPS location, vehicle and/or individual wheel speed, tyre pressure (from the Tyre Pressure Monitoring System - TPMS), vehicle acceleration (which may be detected or derived by a Vehicle Dynamics Control system - generally known as ESC, or Electronic Stability Control), steering wheel angle, brake pedal position, throttle pedal position, engine revolutions, driving gear status, ESC system on or off, ABS system on or off, cruise control on or off, lane departure warning system alert status, etc. Data can be collected in connection with the foregoing by the use of known and available sensors installed in the vehicle. Additional sensors may be installed to improve accuracy of the damage detection system, dependent on the required threshold and type/location of damage desired to be detected. However, it is envisaged that the invention may be implemented by software configuring existing hardware already installed in many current vehicles. The incident log will capture the relevant time-frame before and after the abnormal event. Vehicle spped may be measured directly, or by aggregation of wheel speed sensor signals.

It may be useful to vehicle owners or operators to know whether an incident occurred in a stress situation, e.g. collision avoidance. The damage detection system according to the invention may therefore be configured to add an "emergency situation" flag to recorded data where particular "emergency indication" sensors including one or more of the following: brake pressure, brake pedal position, "ESC system on", and "ABS system on"; indicate that the vehicle driver was responding to an emergency situation when the incident occurred.

The sensor information could be analysed in a vehicle fleet management centre to determine whether the vehicles in the fleet regularly visit places where there is an above average risk of severe and potentially damaging shock loads to vehicle suspension systems. This analysis may lead to issue of care points to drivers, and/or revision of route guidance.

Once inspected, the system can be reset such that the user no longer receives a continued warning message. The memory may or may not be erased after inspection but, in any event, it is expected that a central database external to the vehicle will be updated with details of the incident for statistics gathering by the manufacturer, owner, and/or operator. Such a database may be located at the premises of a vehicle manufacturer or dealer, and/or at a fleet vehicle management centre.

According to a second broad aspect of the invention, there is provided a method for detecting suspension or steering damage to a wheeled vehicle, utilising at least one sensor located on the vehicle to be monitored for an input condition for comparison to a corresponding safety threshold; wherein if an incident causes the safety threshold to be exceeded, then details of the incident are logged for later analysis; characterized in that the method further comprises the informing a vehicle user of the incident using an alert means activated by the control unit immediately upon detection of the incident and/or periodically such as on vehicle ignition. Preferably, exceeding the safety threshold causes an alert to be issued e.g. to a car dealer, vehicle manufacturer, vehicle supplier, or fleet vehicle management centre, such that contact to the user of the vehicle may be made to arrange a damage inspection. Triggering of an alert may depend on a combination of inputs from at least two sensors.

Furthermore, it is preferable that exceeding the safety threshold also causes an alert to the vehicle user, e.g. in the form of a dashboard light, message on a display screen and/or an audible sound. Preferably this operator warning is delivered immediately upon detection of an incident; and is repeated upon ignition of the vehicle and/or periodically after the initial alert is registered.

### BRIEF DESCRIPTION OF THE DRAWINGS

Figure 1 illustrates a block diagram of the damage detection system according to the invention.
Figure 2 illustrates a block diagram of damage detection and reporting hardware according to the invention.

### DETAILED DESCRIPTION OF THE PREFERRED EMBODIMENT

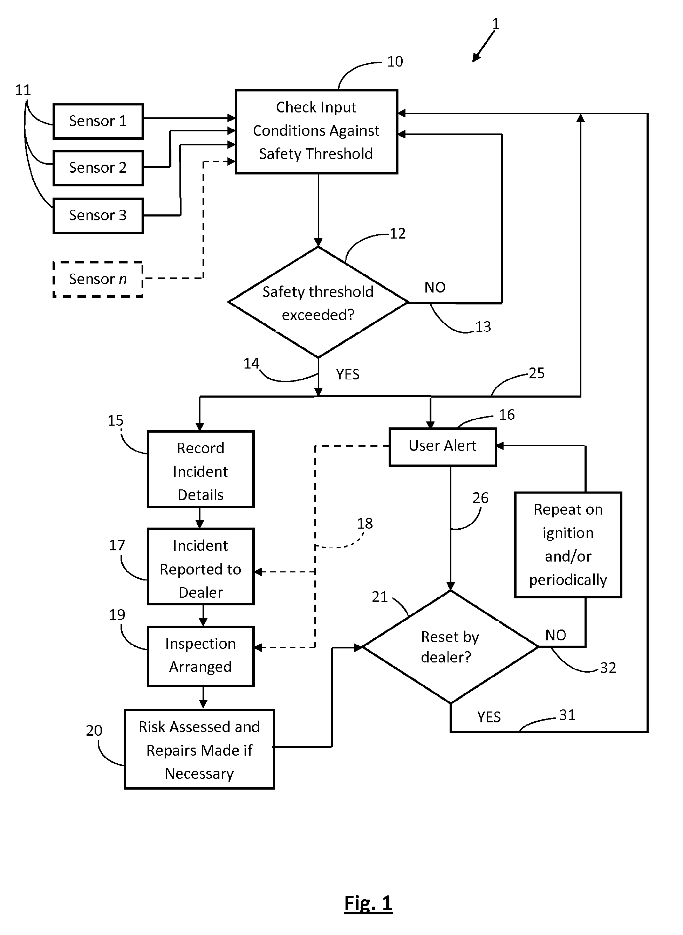

Referring to Figure 1, which represents both system components and method steps, the invention is primarily implemented by the use of a control unit 10, receiving and processing input signals from a series of sensors 11 (labelled "Sensor 1", "Sensor 2" to "Sensor n") located about the vehicle (not illustrated). The multiple sensors 11 are intended to detect any abnormal loading and may comprise existing vehicle sensors (e.g. acceleration sensors, speed sensors etc.) and/or additional dedicated sensors (e.g. strain sensors), to determine whether an incident has occurred; and its magnitude of input into the vehicle chassis. Control unit 10 continually monitors input from the series of sensors 11 to determine whether a predetermined threshold for a particular sensor; or for a combination of inputs from a plurality of sensors; has been exceeded. The processor determination step is indicated as reference numeral 12 in Figure 1.

Safety thresholds programmed into the control unit 10 and processor 12 are derived from parameters set by the vehicle manufacturer according to safety tolerances which are known from theory and/or experiment. The particular tolerance set for a sensor output will depend on the type of component, the particular design of the component, the vehicle type, or any other variable considered relevant to damage assessment.

Referring back to Figure 1, assuming that no safety threshold has been exceeded, the control unit continues to cycle through its checks and monitor sensor output as indicated by the "NO" branch 13 extending from processor 12.

In the event of a safety threshold parameter for a particular sensor or combination of sensors being exceeded, i.e. when an incident has occurred, the control unit 10 registers a "YES" result 14 which must be further processed according to the invention. Specifically, the system will record/store details of the incident to a memory means 15 and/or activate a user alert means 16. The control unit continues to cycle through checks and monitor sensor outputs (step 25), in case multiple incidents occur.

An appropriate warning message issued by alert means 16 could be in the form of text or of a spoken message, e.g.:
*in the event of an incident being detected -* "an abnormal vehicle impact on the [front/rear left/right] wheel has been detected. A vehicle safety inspection by your local dealer is required"; and/or
*upon re-ignition -* "an abnormal impact on the vehicle was registered on [insert date] at [insert time]. A vehicle safety inspection by your local dealer is required".

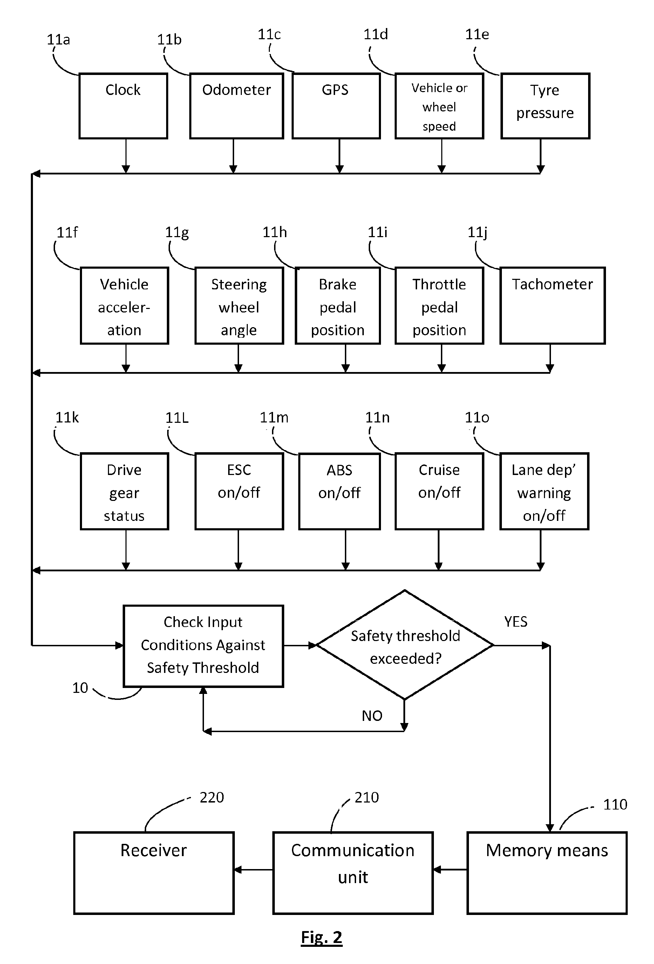

Memory means 15 preferably logs all available details, ultimately collected from the series of sensors and other existing vehicle monitoring systems. For example, the following details may be collected and logged: date and time (11a, Fig. 2), mileage (11b, Fig. 2), GPS location (11c, Fig. 2), vehicle and/or individual wheel speed (11d, Fig. 2), tyre pressure (11e, Fig. 2; from TPMS), brake pressure, vehicle acceleration (11f, Fig. 2; which may be from an ESC), steering wheel angle (11g, Fig. 2), brake pedal position (11h, Fig. 2), throttle pedal position (11i, Fig. 2), engine speed, (11j, Fig. 2) driving gear engaged (11k, Fig. 2), and the on/off status of the following systems, generally known as driver assistance systems: ESC (11L, Fig. 2), ABS (11m, Fig. 2), cruise control (11n, Fig. 2), and lane departure warning system (11o, Fig. 2). Such information helps to build a complete picture as to the conditions surrounding the incident. The severity of the incident could also be assessed; however, it is intended that the user will be instructed to seek inspection of the vehicle in any event where a relevant safety threshold has been exceeded, so as to avoid further damage being developed as a consequence of no precautionary action being taken following the incident. Not all of the above sensors will have associated safety thresholds; for example, the vehicle clock, odometer,and GPS; the tachometer, drive gear status, and cruise control on/off status could be used for data recording only. Vehicle speed may be recorded directly, or by aggregation of wheel speed sensor signals.

In the preferred embodiment of the invention, the incident is reported by a communication unit 17 to a party external to the vehicle, e.g. an official dealer, a vehicle manufacturer or repairer, or a vehicle fleet management centre; preferably automatically by use of a wireless vehicle telematics service (e.g. CarWings™). Full or partial details of the incident can be logged in a central storage database which will assist statistics gathering for the entire pare of a particular model of motor vehicle; and/or for a fleet of vehicles owned and/or operated by a particular commercial entity.

Furthermore, it is intended that a recipient (220, Fig. 2) of the incident report from communication unit 17 (210 in Fig. 2) will contact the vehicle owner to verify the incident and to arrange an inspection (denoted by numeral 19) as a precautionary measure.

According to Figure 1 it will be apparent (as indicated by dashed lines 18) that a vehicle user, prompted by alert means 16, could voluntarily contact the vehicle supplier (17) to arrange inspection (19); however, it is intended that the incident reporting function of the invention is at least partially automated in order to avoid reliance on action by the vehicle user. In any event, details of the incident are recorded in the memory means 15 (110 in Fig. 2) in order to trace the origin of any serious damage, should such details ever be disputed.

Upon inspection (box 20 in Figure 1), the actual damage and risk of further damage can be assessed; and repairs can be made if needed. Following this task, the user alert aspect of the system is reset by the repairer at box 21. However, it is possible that multiple incidents could be recorded on the system; such that each must be assessed before the user alert is completely reset. Accordingly, it is envisaged that several distinct warning alert types could be communicated to the user at any one time if needed. The system will continue to display warning messages unless reset (step 32); and will continue to monitor the sensors even if reset (step 31). It is intended that the system can only be reset by a dealer or authorized repairer (step 21).

The damage detection system of the invention is well adapted for detection of damage to vehicle suspension or steering components. However, the general concept can be applied to any vehicle component where undetected damage can develop into a more serious problem, e.g. deformation of steering or suspension mounting points.

In a preferred form of the invention a control unit, which may be software integrated into an existing controller computer unit within the vehicle, predicts damage (e.g. suspension damage) by measuring the magnitude of the initial input load, as opposed to measuring corollary symptoms (e.g. increased vibrations, tyre pressure loss etc.) exhibited as a result of the damage. An alert/warning is transmitted directly to the driver and to the OEM/supplier/dealer/fleet vehicle management centre, which is triggered at loading levels well below those experienced during a vehicle crash. The system on board the vehicle is continuous, as opposed to being a one-off test set-up or the like (eg. performed at servicing only).

The invention results in improved data capture which can be used to improve safety for vehicle occupants. It is particularly beneficial in cases where a component is deformed under excessive load (e.g. a kerb-strike); which deformation does not result in immediate performance impairment, but consequently leads to a reduction in durability life, and/or to fatigue cracking. By detecting and notifying any potential damage to critical chassis/body components (especially where such components are not visible/obvious to the driver of the vehicle), the system and method of the invention can mitigate potential component failures that may result in impairment of vehicle control. Suspension damage may also lead to uncomfortable ride motions and/or to increased tyre wear. A visual warning to the vehicle operator may mention the possibility of increased tyre wear.

Advantageously, if the invention can be implemented by utilising existing hardware, software development/cost will be minimal. Particularly, existing accelerometers, speed sensors, TPMS sensors, steering wheel angle sensors, throttle and brake pedal position sensors and/or GPS can all be integrated into the system.

## Claims

1. An onboard system (1) for suspension or steering damage detection in a wheeled vehicle including:
a control unit (10);
at least one sensor (11a-11o); and
a memory means (110) for logging an incident;
wherein the control unit (10) monitors an input condition to the at least one sensor (11a-11o) for comparison to a safety threshold;
and if a safety threshold is exceeded then a log of the incident is recorded to the memory means;
**characterized in that**:
the system further includes an alert means for informing a vehicle user of the incident; wherein the alert means is activated by the control unit (10) immediately upon detection of the incident and/or periodically such as on vehicle ignition.

2. The system (1) for damage detection according to claim 1 wherein the safety threshold for the input condition is less than a level which would cause immediate serious impairment to operation of the vehicle.

3. The system (1) for damage detection according to claim 1 or 2, further including a communication unit such that the incident is able to be reported to a receiver, external to the vehicle.

4. The system (1) for damage detection according to any of the preceding claims wherein the incident log recorded by the memory means (110) includes details selected from one or more of the following: date and time (11a), vehicle mileage (11b), GPS location (11c), vehicle and/or individual wheel speed (11d), tyre pressure (11e), vehicle acceleration (11f), steering wheel angle (11g), brake pedal position (11h), throttle pedal position (11i), engine revolutions (11j) and driving gear status (11k); and on/off status of ESC (11L), ABS (11m), cruise control (11n), and lane departure warning system (11o).

5. The system (1) for damage detection according to any of the preceding claims wherein there are a plurality of sensors (11a-11o), said sensors comprising safety related sensors (11d-11i, 11L, 11m, 11o), and background data sensors (11a-11c, 11j, 11k, 11n), where the or each safety related sensor has a corresponding safety threshold for its input condition.

6. The system (1) for damage detection according to claim 5, wherein a plurality of sensors (11d-11i, 11L, 11m) are associated with either or both of the Tyre Pressure Monitoring System (TPMS) and Electronic Stability Control (ESC) of the vehicle.

7. The system (1) for damage detection according to any one of the preceding claims wherein the sensors (11a-11o) include one or more of the following sensor types: accelerometers (11f), gyroscopes, vehicle and/or wheel speed sensors (11d), tyre (11e) or brake pressure sensors, pedal position sensors (11h, 11i), steering wheel angle sensors (11g), strain sensors, impact sensors, GPS (11c), and driver assistance system on/off sensors (11L, 11m, 11n).

8. A method for detecting suspension or steering damage to a wheeled vehicle utilising at least one sensor (11a-11o), located on the vehicle, to be monitored for an input condition for comparison to a safety threshold; wherein if an incident causes the safety threshold to be exceeded then details of the incident are logged (15) for later analysis;
**characterized in that**:
the method further comprises the informing a vehicle user of the incident using an alert means activated by the control unit (10) immediately upon detection of the incident and/or periodically such as on vehicle ignition.

9. The method for detecting damage to a vehicle of claim 8 wherein the safety threshold is set to a level less than that which would cause immediate serious impairment to operation of the vehicle.

10. The method for detecting damage to a vehicle of claim 8 or 9 wherein, when an incident is logged, an alert (16) is issued such that a recipient of the alert is prompted to arrange a safety inspection (19); the recipient of the alert being external to the vehicle and/or a user of the vehicle.

11. The method according to claim 10, wherein the recipient of the alert is an OEM, vehicle supplier, vehicle dealer, authorized repairer, and/or fleet vehicle management centre.

12. The method for detecting damage to a vehicle according to claim 10 or claim 11 wherein, following a safety inspection (19), the alert (16) is partially or fully reset to enable continued use of the vehicle.

13. The method for detecting damage to a vehicle according to any one of claims 8 to 12 wherein one or more of the following details of the incident are collected and stored: date and time (11a), vehicle mileage (11b), GPS location (11c), vehicle and/or individual wheel speed (11d), tyre pressure (11e), vehicle acceleration (11f), steering wheel angle (11g), brake pedal position (11h), throttle pedal position (11i), engine revolutions (11j), driving gear status (11k); and on/off status of ESC (11L), ABS (11m), cruise control (11n), and lane departure warning system (11o).

14. The method for detecting damage to a vehicle according to any one of claims 8 to 13 wherein the method is implemented by use of a plurality of sensors (11a-11o), selected from but not limited to: accelerometers (11f), vehicle and/or wheel speed sensors (11d), pressure sensors (11e), steering wheel angle sensors (11g), pedal position sensors (11h, 11i), strain sensors, force sensors, GPS (11c), and driver assistance system on/off sensors (11L, 11m, 11n).

15. A wheeled vehicle incorporating an onboard system (1) for suspension or steering damage detection according to any of the preceding claims 1 to 7.
